# EUROPÄISCHE PATENTSCHRIFT

(11) **EP 0 814 994 B1**
(45) Veröffentlichungstag und Bekanntmachung des Hinweises auf die Patenterteilung: **12.01.2000**
(21) Anmeldenummer: 96911976.7
(22) Anmeldetag: 30.03.1996
(51) Int. Cl.: B61C 13/04, B61B 13/08, B60L 5/00

(54) **SPURGEFÜHRTE TRANSPORTEINRICHTUNG MIT ENERGIE- UND INFORMATIONSÜBERTRAGUNG**
TRACK-GUIDED TRANSPORT SYSTEM WITH POWER AND DATA TRANSMISSION
DISPOSITIF DE TRANSPORT A SYSTEME D'ALIGNEMENT AVEC TRANSFERT D'ENERGIE ET D'INFORMATION

(30) Priorität: 03.04.1995 DE 19512107; 03.04.1995 DE 19512523
(43) Veröffentlichungstag der Anmeldung: 07.01.1998
(73) Patentinhaber: CEGELEC AEG Anlagen- und Automatisierungstechnik GmbH, 60528 Frankfurt (DE); DaimlerChrysler AG, 70567 Stuttgart (DE)
(72) Erfinder: ANSORGE, Ulrich, D-71034 Böblingen (DE); WUNDERLICH, Horst, D-72184 Entingen (DE); ALDINGER, Michael, D-89233 Neu-Ulm (DE); SEELIG, Anton, D-65439 Flörsheim (DE); HUDER, Bernhard, D-87435 Kempten (DE)
(74) Vertreter: Dreiss, Fuhlendorf, Steimle & Becker, Patentanwälte
(86) Internationale Anmeldenummer: EP9601407
(87) Internationale Veröffentlichungsnummer: WO9631381

(56) Entgegenhaltungen:
- DE-A- 2 840 215
- DE-A- 3 806 347
- GB-A- 2 277 069
- US-A- 4 969 400
- US-A- 4 974 520
- ELEKTRIE, Bd. 34, Nr. 7, 1980, BERLIN,DE, Seiten 339-341, XP002010039
- PATENT ABSTRACTS OF JAPAN vol. 10, no. 191 (M-495) [2247] , 4.Juli 1986 & JP,A,61 035102 (HITACHI LTD), 19.Februar 1986,

## Beschreibung

Die Erfindung betrifft eine spurgeführte Transporteinrichtung nach dem Oberbegriff des Anspruchs 1.

Transporteinrichtungen sind in der Produktionstechnik und Lagertechnik in vielerlei Ausführungsformen in Gebrauch. Beispielsweise gibt es in der Automobilindustrie ein Zuliefersystem für Montageteile, welche am Montageband benötigt werden, in Form einer Elektrohängebahn, welche mit eigenem Antrieb und spurgeführt die einzelnen Arbeitsplatze anzufahren gestattet.

In Hochregallagern befinden sich Behälter mit Gütern oder Paletten, die auf Fahrzeuge verladen werden müssen. Dazu ist beispielsweise ein Hubförderer vorgeshen, welcher den Höhenunterschied zwischen den Fahrzeugen und den Plätzen im Hochregallager überwindet. Das Fahrzeug dockt beispielsweise an dem Hubförderer an, welcher ihm zugewiesen wurde und übergibt ihm die zu lagernde Palette. Aufgrund der Kennung, die auf der Palette angebracht ist, oder die ihm vom Fahrzeug übermittelt wurde, kann der Hubförderer das Einsortieren der Palette beginnen.

Die Ladefläche eines solchen Fahrzeugs kann je nach Verwendungszweck unterschiedlich gestaltet sein. Beispielsweise ist ein Quergurtförderer sehr nützlich zum Be- und Entladen von Behältern oder Paletten. Selbstverständlich kann zum Zusammenstellen von Kommissionen ein Behälter mit dem Fahrzeug verschiedene Stationen anfahren und mit Teilen aus dem Lagerbestand beladen werden.

Es ist offensichtlich, daß zukünftige Transporteinrichtungen zur Bewältigung der beschriebenen vielseitigen Aufgaben auf technologisch hochentwickelten Teilsysternen basieren müssen, die, um kostengünstige individuelle Lösungen für das breite Anwendungsspektrum zu ermöglichen, aus standardisierbaren Sytemkomponenten aufgebaut sind. Für ihre Entwicklung haben geringer Verschleiß, geringe Geräuschentwicklung und ein niedriger Energieverbrauch eine hohe Priorität. Die grundlegenden Teilsysteme derartiger Transporteinrichtungen sind:
- Trag- und Spurführungselemente zum anwendungsspezifschen Aufbau von Fahrstrecken oder Fahrsstreckennetzen für Transportfahrzeuge.
- Autonome, rechnergeführte Transportfahrzeuge mit eigenem elektrischem Antrieb und anwendungsspezifischen Aktoren und Sensoren und einer Informationsverarbeitung auf den Fahrzeugen. Derartige Transportfahrzeuge sind im folgenden auch als Transportelemente bezeichnet.
- Energieübertragungseinrichtungen, bestehend aus primärseitigen Energieübertragungselementen zum Aufbau von entlang der Fahrstrecken verlaufender elektrischer Energieversorgungskreise, nachfolgend Primärkreise genannt, und sekundärseitigen auf den Fahrzeugen angeordneten Energieübertragungselementen zur Aufnahme elektrischer Energie aus dem Primärkreis während der Fahrzeugbewegung und im Stillstand.
- Informationsübertragungseinrichtungen zum bidirektionalen Austausch von Bewegungs- Steuer- und Meldeinformationen zwischen ortsfesten Stationen und Fahrzeugen sowie Fahrzeugen untereinander.

Aus der WO-A-9217929, von der die Erfindung ausgeht, ist eine berührungslose induktive Energieübertragung auf Transportfahrzeuge bekannt. In dieser Anmeldung wird eine längs der Fahrstrecke verlegte und mit einem 10-kHz-Strom gespeiste Doppelleitung, die den Primärkreis bildet, beschrieben. Die beiden Leiter des Primärkreises werden von Stützen aus elektrisch und magnetisch nichtleitendem Material getragen. Zur Energieaufnahme sind auf jedem Transportfahrzeug mindestens ein E-förmiger Übertragerkopf mit einem Ferritkern angeordnet, dessen Mittelsehenkel eine Sekundärwicklung trägt und tief in den Raum zwischen den beiden Leitern hineinragt. Über den Ferritkern sind der Primärkreis der Doppelleitung und die Sekundärwicklung des Übertragerkopfes elektromagnetisch gekoppelt, so daß die auf dem Fahrzeug bzw. dem Transportelement bespielweise für den Antrieb benötigte Energie von dem Primärkreis auf die Sekundärwicklung übertragen und von dieser über elektronische Stell- und Regeleinrichtungen dem Antrieb und weiteren Verbrauchern auf dem Transportelement zugeführt wird. Eine derartige Doppelleitung besitzt ein sich weit in die Umgebung ausbreitendes elektromagnetisches Streufeld, das in benachbarten Signalleitungen elektromagnetische Störungen verursacht und in benachbarten Metallteilen beispielsweise der Trag- und Spurführungselemente, insbesondere wenn diese aus Stahl bestehen, Wirbelströme induziert, die mit erheblichen Energieverlusten verbunden sind. Zur Verminderung dieser Nachteile ist daher eine hier zusätzlichen Raum beanspruchende und auch Kosten verursachende Abschirmung der Doppelleitung erforderlich. Das ausgedehnte Streufeld der Doppelleitung bewirkt auch eine große Leitungsinduktivität und wegen der hohen Frequenz einen großen induktiven Spannungsabfall, der durch einen entsprechend hohen Aufwand an Kondensatoren kompensiert werden muß.

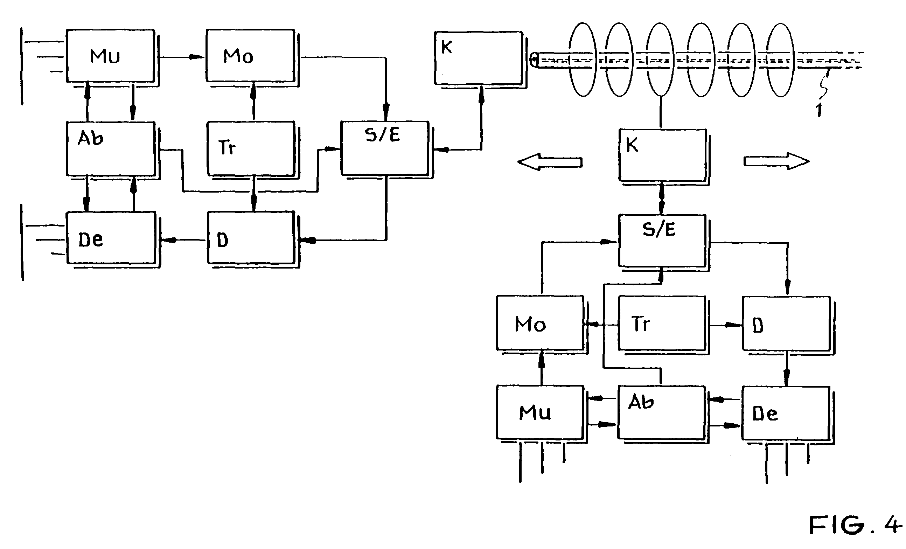

In der GB-A-2 277 069 wird vorgeschlagen, für den bidirektionalen Austausch von Informationen zwischen einer ortsfesten Station und einem spurgeführten Transportelement mit einer ferngesteuerten Kamera entlang der Fahrstrecke einen Leckwellenleiter zu verlegen, der aus einem Koaxialkabel mit einem unvollständigen, grobmaschigen äußerem Schirm besteht. Um Störungen durch Interferenzen zu minimieren ist vorgesehen, diese Informationsübertragung in der Nähe der Fahrstrecke zu lokalisieren. Bei dieser Transporteinrichtung erfolgt die Energieübertragung über einen aus konventionellen Schleifkontaktschienen bestehenden Leistungsbus. Aus der Figur 4 sowie der Beschreibung auf Seite 11, Zeile 9 - 18 geht außerdem hervor, daß auch Signale über diese bekannten Kontaktschienen übertragen werden. Eine Signalübertragung über Leckwellenleiter ist nicht näher beschrieben.

Aus der DE-A-3 926 401 ist eine Transporteinrichtung für Paletten und Behälter bekannt, die durch magnetische Felder getragen und in einer Spur geführt werden. Es handelt sich hierbei um ein ausschließlich in Einbahntunnels zu installierten des Hochgeschwindigkeitstransportsystem, das Transportaufgaben übernehmen soll, die bisher dem Eisenbahn- Automobilfern- und Landflugverkehr vorbehalten sind. Hierbei sind die bewegten Transportelemente völlig passiv, so daß das hier angewandte Prinzip für die vielsohichtigen Transportaufgaben der Poduktions- und Lagertechnik relativ unflexibel ist.

Bei diesen dem Stand der Technik entsprechenden Transporteinrichtungen ist jeweils nur eines der eingangs erwähnten und für zukünftige flexible Transportaufgaben der Lager- und Produktionstechnik vorteilhaften Teilsysteme wie berührungsiose Energieübertragung und berührungslose Informationsübertragung auf ein autonomes Transportelement mit eigenem rechnergeführten Antrieb, der vorteilhaft auch als Linearantrieb ausgeführt und mit einem magnetischen Trag- und Spurführungssystem kombiniert ist, realisiert. Gerade die Kombination dieser Teilsysteme bei einer Transporteinrichtung bietet die Chance der mechanischen und funktionalen Integration verschiedener Teilsysteme und führt zu konstruktiv vorteilhaft gestalteten, raum- und kostensparenden standardisierten Systemkomponenten mit geringem Verschleiß, geringem Betriebsgeräusch und niedrigem Energieverbrauch.

Die Erfindung hat daher die Aufgabe, eine spurgeführte Transporteinrichtung nach dem Oberbegriff des Anspruchs 1 so weiterzuentwickeln, daß eine ununterbrochene Energie- und Informationsübertragung zu einem Transportelement während der Bewegung verschleiß- und geräuschfrei erfolgt und daß die dafür erforderlichen Mittel, insbesondere die Leiteranordnungen raumsparend und konstruktiv einfach gestaltet im Bereich der Spurführungs- und Tragelemente angeordnet sind und von diesen mechanisch geschützt werden.

Die Aufgabe wird gemäß der Erfindung durch die im Kennzeichen des Anspruchs 1 aufgeführten Merkmale gelöst.

Weiterbildungen der Erfindung sind in den Unteransprüchen beschrieben.

Ein Anwendungsgebiet der Erfindung ist zunächst der Ersatz von Einrichtungen, bei denen die Energie über Schleifkontakte oder Schleppkabel zugeführt wird. Bedeutende Anwendungen für die berührungslose Übertragung elektrischer Energie bestehen bei Laufkatzen von Hebezeugen, Hochregallagern oder Magnetbahnen. Auch für Fahrstühle wäre ein solches System zur Übertragung von Energie und Information in die Kabine von Vorteil. Roboter, die eine bestimmte Wegstrecke abfahren und, sich um eine Achse drehen müssen, um an verschiedenen Einsatzorten tätig zu sein, können ebenfalls mit einem solchen System mit Energie versorgt werden.

Ein wesentlicher Vorteil der Erfindung wird in der 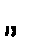 koaxialen" Anordnung der Leiter der Energieübertragung gesehen. Der Mittelleiter ist am Ende des Fahrweges mit dem U-förmigen Außenleiter verbunden, so daß der Strom vom Mittelleiter über die Außenwandungen zurückfließt. Der Strom verteilt sich auf zwei Außenwände. Trotz der niedrigen Eindringtiefe findet der Strom einen großen Querschnitt vor. Die koaxiale Anordnung gewährleistet zum einen eine möglichst kleine Induktivität der Leitung, so daß größere Übertragungslängen möglich sind und erfüllt gleichzeitig auch die Abschirmung der Anordnung gegenüber ausstreuenden Feldern. Das Streufeld Φ₀ liegt im wesentlichen nur innerhalb des Koaxialleiters und zwar im Inneren des Mittelleiters und um diesen herum. Da das Abschirmgehäuse mit der Rückleitung vereint ist, hat man einen zusätzlichen Vorteil dadurch, daß Leitermaterial eingespart wird. Man spart außerdem wegen der kleineren Induktivität eine bedeutende Zahl von Kondensatoren zur Kompensation der induktiven Spannungsabfälle.

Auch die Informationsübertragung mit Hilfe eines geschlitzten Koaxialkabels bietet im Zusammenwirken mit der berührungslosen Energieübertragung viele Vorteile. Es gibt keine Störungen der Wellenausbreitung durch Dritte, keine Reflexion oder Abschattung, mit denen Funksignale, beispielsweise in einem hohen Regallager, gestört werden können. Der Datendurchsatz kann ein bis 4 Mbit/sec betragen. Damit ist ein autonomer Fahrbetrieb mit einem Fahrzeug möglich, welches alle Automatisierungs- und Steuerungsaufgaben selbsttätig erledigt. Es ist sogar eine Kommunikation zwischen den einzelnen Fahrzeugen möglich.

Die Vorteile der Erfindung zeigen sich auch in einer höheren Flexibilität der Transportabwicklung, da von einer zentralen Informationsverarbeitungs- und Steuerzentrale als Feststation sämtliche Fahrzeuge überwacht und automatisch geführt weden, wobei wiederum die Fahrzeuge ihre Nahziele selbsttätig anfahren.

Die Erfindung wird nachstehend anhand der Zeichnung näher erläutert.

Dabei zeigt:
- Fig. 1: eine schematische Ansicht der Transporteinrichtung;
- Fig. 2: ein Blockschaltbild der berührungslosen Informationsübertragung
- Fig. 3: eine Kombination von Energieübertragung und Informationsübertragung;
- Fig. 4: das Prinzip der Informationsübertragung über einen Wellenieiter mit Blockschaltbild;
- Fig. 5: die mechanische Integration des Leckwellenleiters der Informationsübertragung und der Leiteranordnung der Energieübertragung;
- Fig. 6: den strukturellen Aufbau des Transportelements;
- Fig. 7: eine Ausführungsform von Energie- und Informationsübertragung
- Fig. 8: eine Ausführungsform von Energie- und Informationsübertragung mit parallel zur Bewegungsebene liegenden Spalten zwischen der primären Leiteranordnung und dem Übertragerkopf;
- Fig. 9: eine Darstellung der Integration des Außenleiters der Energieübertragung in die Trag- und Führungselemente;
- Fig. 10: die Anordnung des offenen Koaxialleiters im Längsschnitt bzw. in Draufsicht;
- Fig. 11: einen Querschnitt durch den offenen Koaxialleiter mit dem Übertragerkopf;
- Fig. 12: den Querschnitt durch den offenen Koaxialleiter an einer Stelle, an der sich im Augenblick kein bewegtes System befindet und
- Fig. 13: eine besonders vorteilhafte, detaillierte Ausführungsform eines Koaxialleiters mit Übertragerkopf im Querschnitt.

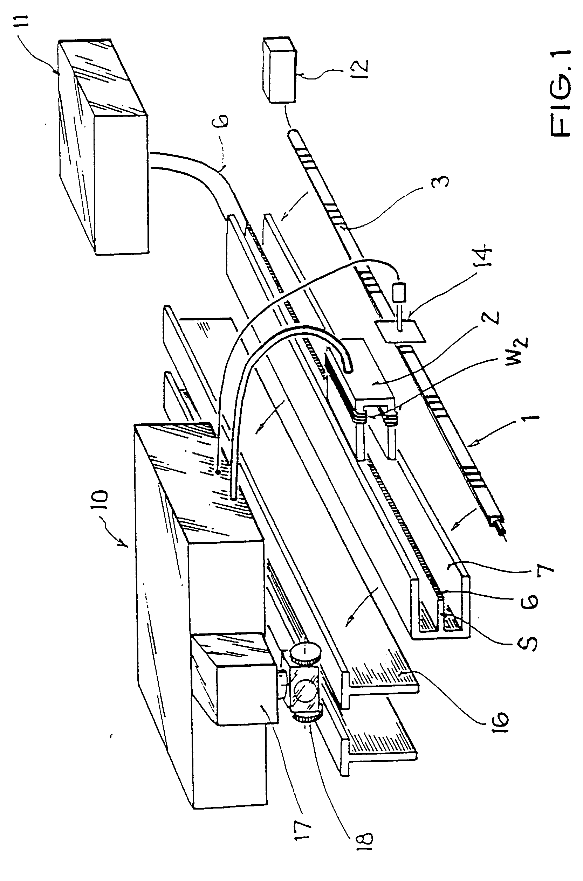

Die Erfindung wird zunächst anhand der schematischen Darstellung in Fig. 1 beschrieben.

Das zum Transport bestimmte Transportelement 10 läuft beispielsweise auf Rollen 18 und diese auf Schienen 16, wobei der Antrieb mit Hilfe eines Motors 17 durchgeführt wird. Seitenführung und Art des Antriebs sind für das in Fig. 1 dargestellte Prinzip unwichtig, jedoch ist eine verschleißarme Antriebsart anzustreben. Die Energie für den Antrieb des Motors und für weitere Servoantriebe wird durch die berührungslose Energieübertragung sichergestellt. Letztere besteht aus Übertragerkopf 2 mit der Wicklung W₂ als mit dem Transportelement 10 bewegtem Sekundärteil und dem ortfesten Primärkreis des Übertragers, das aus Mittelleiter 6 und Außenleiter 7 sowie einee Leiterstütze S aufgebaut ist. Der Mittelleiter 6 ist in einer Leiterstütze bzw. einen Steg S aus Kunststoff eingelassen. Der Kern des Übertragerkopfes 2 besteht vorzugsweise aus einem Ferrit-Material. Das Primärelement ist eine zu einer Seite hin offene E-förmige Anordnung. Diese ist an der Tragschiene 16 befestigt. Der Primärkreis wird von einem Mittelfrequenzgenerator 11 gespeist. Die Informationsübertragung geht von einer Feststation 12 aus, welche Informationen über ein mit Öffnung 3 versehenes Koaxialkabel 1 längs der Fahrstrecke überträgt. Eine 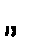 Patch"-Antenne 14 leitet die Informationen an eine Mobilstation weiter, welche auf dem Wagen montiert ist, der auf den als Tragelemente 16 bezeichneten Schienen läuft.

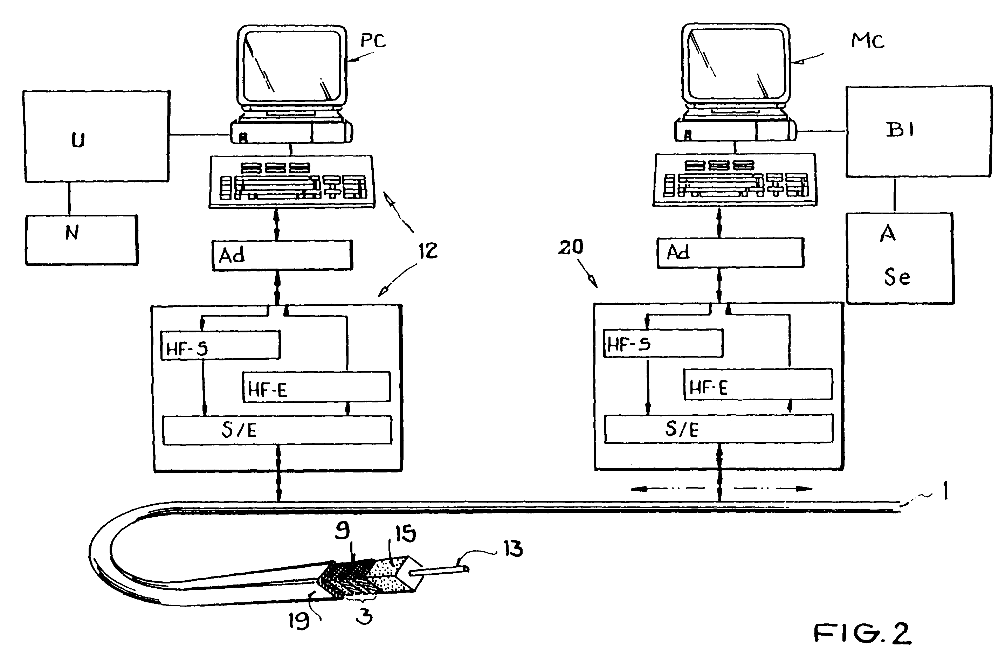

In Fig. 2 ist die Struktur der Datenübertragung genauer dargestellt. Von der Feststation 12 aus wird mittels eines Fahrprogramms oder einer Software U aus einem Netz oder einem Datenspeicher N über einen Adaptermodul Ad und einen HF-Sende/Empfangsteil HF-S und HF-E über einen Schalter S/E der Wellenleiter 1 gespeist. Der Sende- und Empfangsteil, sowie die Datenverarbeitung auf den Transportelementen 10 sind in Fig. 2 mit dem Bezugszeichen 20 versehen. Der Aufbau dieser Einheit entspricht der Anordnung in der Feststation 12. Der Wellenleiter besteht beispielsweise aus einem mit Schlitzen 3 versehenen Kupferleiter 9 eines Koaxialkabels mit dem Innenleiter 13, dem Isolator 15 und dem Mantel 19. Der Querschnitt kann kreisförmig oder aber quadratisch sein. Am Wellenleiter werden die Signale über ein HF-Modem und einen Adaptermodul auf einen Mini-PC MC übertragen, welcher die Befehlsausführung über eine Einheit BI sowie die in der Einheit A zusammengefaßte Antriebssteuerung und Betätigung von Aktoren bestimmt, in welche auch Sensoren Se Signale eingeben. Diese Konfiguration führt dazu, daß das System der einzelnen Transportelemente 10 eine hohe Flexibilität besitzt, da jeder Wagen unabhängig vom anderen fahren kann.

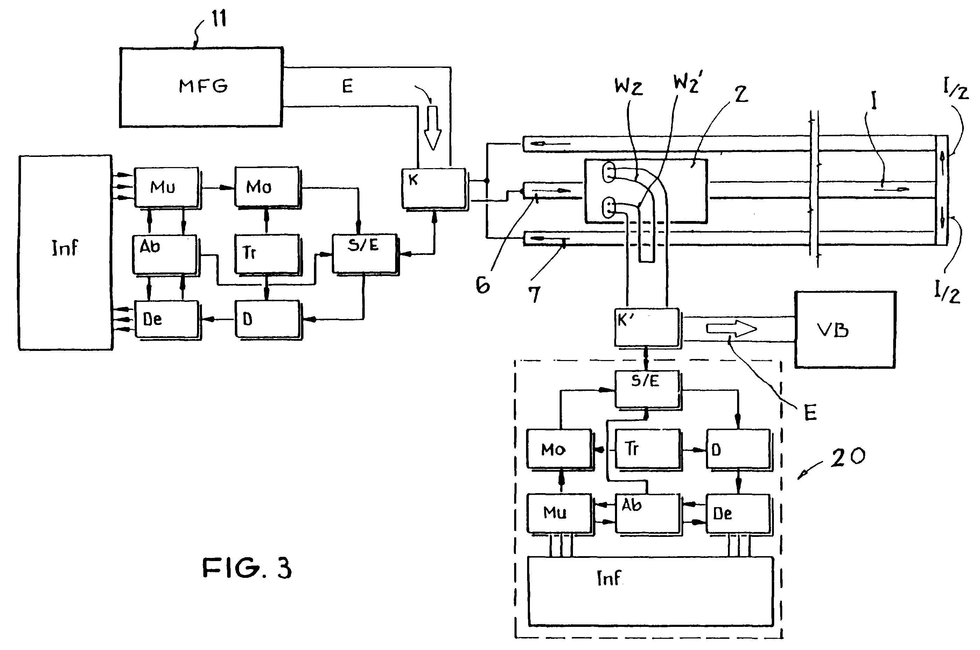

Fig. 3 zeigt beispielhaft eine Kombination von Energie- und Informationsübertragung, bei der die Informationsübertragung die Leiter 6 und 7 der Energieübertragung benutzt. Zu diesem Zweck ist an der Einspeisestelle zum Energieübertager ein Koppelelement K vorgesehen, das beispielsweise als Filter ausgeführt ist. Es überlagert dem Mittelfrequenzstrom aus dem Generator MFG eine höhere Frequenz zur Informationsübertragung. Da die Informationsübertragung sowohl in der Richtung von der Feststation 12 zum Transportelement 10 als auch in der umgekehrten Richtung arbeitet, ist am Eingang des Koppelelements K ein Sende-Empfangsschalter S/E vorgesehen, der abwechselnd Modulatoren Mo und Demodulatoren D für die Informationsübertragung ein- und ausschaltet. Auf dem bewegten System sind die Wicklungen W₂ und W_{2'} des Übertragerkopfes ebenfalls an ein als Filter ausgeführtes Koppelelement K' angeschlossen, das wieder die Trennung von Energie E und Informationen vornimmt. Die Energie wird den Verbrauchern VB zugeleitet.

Fig. 4 zeigt eine entsprechende Struktur der Informationsübertragung mit einem separaten Leckwellenleiter 1. Hierbei ist die Informationsübertragung völlig unabhängig von der Energieübertragung. Der Wellenleiter wird vorteilhaft in dem für industrielle wissenschaftliche und medizinische Zwecke freigegebenen ISM-Band betrieben, weil dies bei einer Trägerfrequenz von 2,4 GHz eine schnelle Datenübertragung gewährleistet und wegen der geringen Reichweite keine Beeinträchtigung der öffentlichen Nachrichtenübertragung erfolgen kann. Der Wellenleiter ist ein Leckwellenleiter, in dessen unmittelbarer Nähe eine Antenne oder Nahfeldsonde auf dem bewegten System geführt wird und die Information zwischen beiden Koppelelementen übertragen. Wie das Blockschaltbild zeigt, wird die Information über die Koppelelemente K auf den Wellenleiter 1 übertragen und auch von ihm abgenommen. Dabei sorgt ein Schalter S/E dafür, daß zwischen Sende- und Empfangsbetrieb umgeschaltet werden kann (bidirektionaler Betrieb). Sowohl auf der Primär- als auch auf der Sekundärseite dieser Informationsübertragung werden die Signale moduliert, bzw. demoduliert und von einer Ablaufsteuerung jeweils bestimmt, ob Daten empfangen oder übertragen werden sollen.

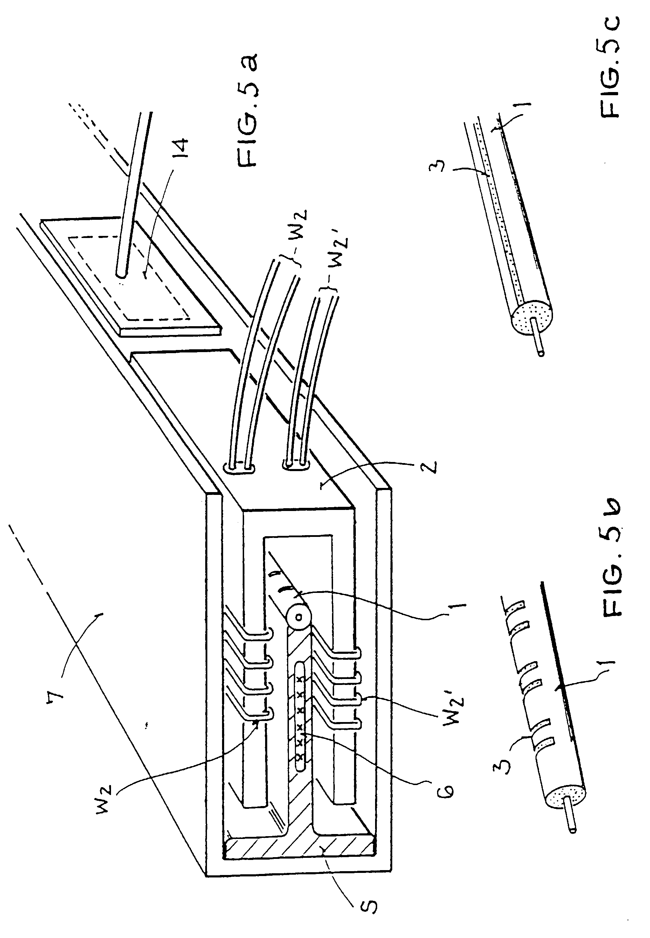

In der Fig. 5a ist eine beispielhafte Integration von Energieübertragungssystem und Informationssystem dargestellt. Der Leckwellenleiter 1 ist am oberen Ende der Leiterstütze S über dem Mittelfrequenzleiter 6 angeordnet. Der Leckwellenleiter kann mit periodisch angeordneten Querschlitzen 3 (s Fig. 5b) oder einem durchgehenden Längsschlitz nach Fig. 5c versehen sein. Die in Gruppen periodisch angeordneten Querschlitze bewirken eine Abstrahlung, durch welche die Kopplung zu einer dielektrischen Patch-Antenne 14 erfolgt. Diese Übertragungsart erfordert einen Mindestabstand zwischen Leckwellenleiter und Patch-Antenne, um ein Hochfrequenzfeld gleichbleibender Intensität in der Umgebung der Patch-Antenne zu erzeugen. Die Patch-Antenne wird daher vorzugsweise seitlich neben dem Übertragerkopf angeordnet.

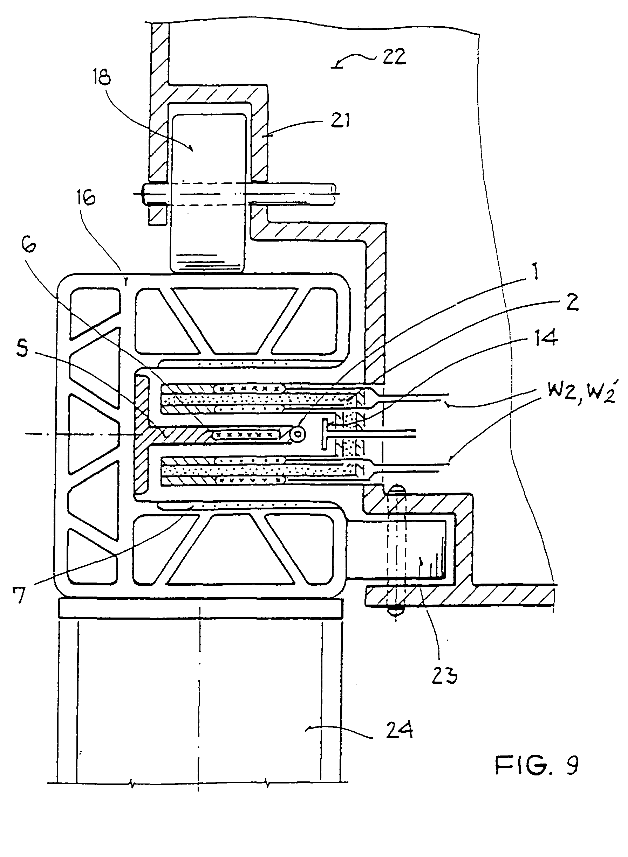

Der durchgehende Längsschlitz im Leckwellenleiter (Fig. 5c) führt zur Ausbildung eines Nahfeldes in seiner unmittelbaren Umgebung. In diesem Fall ist eine Anordnung der Nahfeldsonde 14, wie in Fig. 9 gezeigt, im Inneren des Übertragerkopfes in einem Maximalabstand zum Leckwellenleiter von Vorteil.

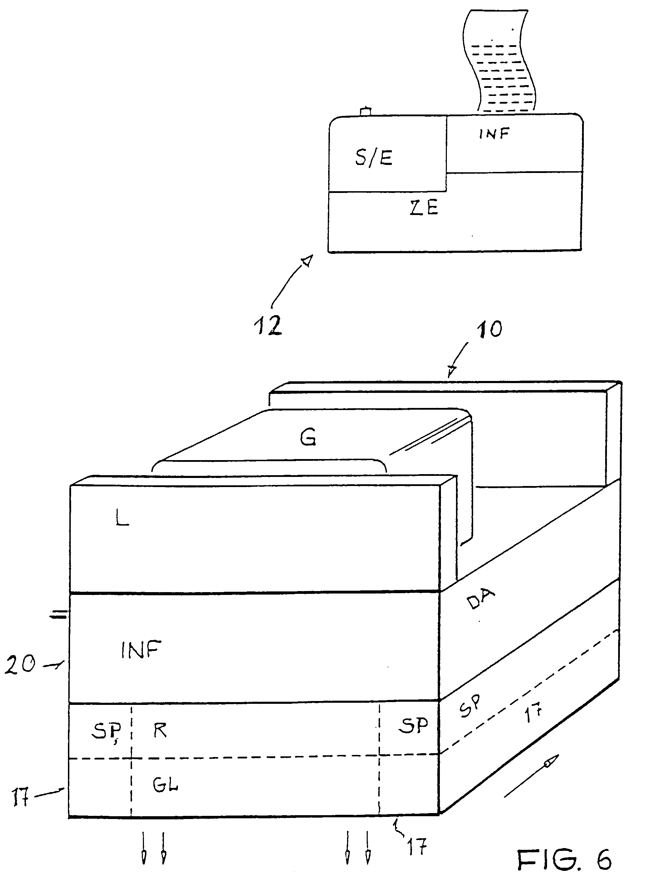

Das Transportelement, welches in Fig. 6 als eine Art Palette dargestellt ist, besteht aus einem Antriebsteil An, welcher in der unteren Ebene zusammen mit Spurführung SP und der Gleitfunktion GL symbolisch dargestellt ist. Diese untere Ebene zusammen mit der obersten Ebene L, welche für die Lagerung von Gütern G vorgesehen ist, bilden eine Art herkömmlichen spurgeführten Wagen. Dieser Wagen wird durch eine Informationsebene INF bzw. 20, zu einem autarken System des Transportelements 10 (s.o. Fig. 1) ergänzt. Diese mittlere Ebene empfängt Daten von einer Feststation 12, welche für den Informationsaustausch wie beschrieben einen Sender und einen Empfänger enthält. Außerdem ist eine Datenverarbeitung DA vorgesehen, welche Aktoren A und Sensoren Se (s. Fig. 2) bedienen kann. Dadurch ist es möglich, beispielsweise eine magnetische Spurführung und Schwerkraftkompensation mit Abstandsregelung durchzuführen. Die Regelung des Antriebs geschieht nach Maßgabe der von der Zentrale ZE übermittelten Vorgaben. Außerdem wird der Abstand der einzelnen Transportelemente, bzw. Fahrzeuge, durch Informationsaustausch zwischen den Fahrzeugen geregelt, so daß keine Kollisionen vorkommen können. Die oberste Ebene der Lagerung und Ein- und Ausgabe L ist vielseitig ausrüstbar, beispielsweise mit einem Hubelement oder einem Rollenförderer.

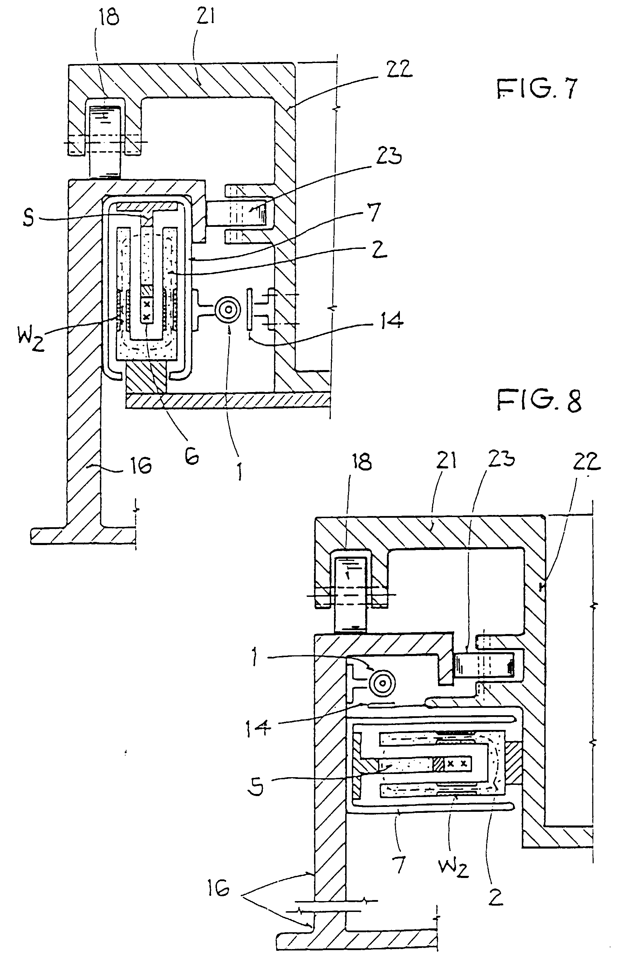

Eine bevorzugte Ausführungsform der Erfindung ist in Fig. 7 dargestellt. Dabei ist das äußere U-Profil 7 des Primarkreises der Energieübertragung gleichzeitig als Tragelement für das Koaxialkabel für die Informationsübertragung benutzt. Das Profil besteht vorzugsweise aus Aluminium. Bei Verwendung von Stahl für die das Tragelement 16 ist es vorteilhaft, den Außenleiter 7 der Energieübertragung aus etwa 2 mm starkem Aluminiumblech in U-Form in das Stahlprofil einzulegen. In dieses U-Profil 7 wird dann die Leiterstütze S eingesetzt, welche beispielsweise zu großen Teilen aus einem Ferrit besteht und beispielsweise mit Schrauben an dem Stahlprofil 16 befestigt wird. Die Rollen 18, welche den Wagen tragen, sind über den Achsträger 21 am Wagenkasten 22 befestigt. Zur Führung des Wagens und Vermeidung von zu großen Seitenausschlägen bei Kurvenfahrten sind Führungsrollen 23 vorgesehen, von denen hier lediglich eine gezeigt wird. Diese Führungsrolle ist ebenfalls mit einem Achsträger an dem Wagenkasten 22 befestigt. Dem geschlitzten Koaxialkabel gegenüber befindet sich die Patch-Antenne 14 zur Informationsübertragung.

Bei einer weiteren Ausführungsform der Erfindung nach Fig. 8 ist die Integration des Energieübertragers in das Streckenprofil 16 nicht so weit getrieben wie im vorherigen Beispiel. Das Stahlprofil dient hier lediglich zur Aufnahme und zum Schutz des Energieübertragers und des Informationsübertragers vor mechanischer Beschädigung. Die Anordnung von Tragrolle und Seitenführungsrolle ist hier nur eine der vielen Möglichkeiten, wobei die Konstruktionsmerkmale weitgehend mit denen der Fig. 7 übereinstimmen. Energieübertragung und Informationsübertragung sind voneinander unabhängig an dem Tragelement 16 befestigt. Die horizontale Lage der Leiterstütze S und des Übertragerkopfes 2 gewährleisten das bei Kurvenfahrten notwendige horizontale Spiel. Falls Weichen vorgesehen sind, kann der bewegliche Teil mit dem Übertragerkopf 2 und der Antenne 14 nach rechts ausscheren.

In einer weiteren Ausführungsform der Erfindung nach Fig. 9 besitzt das Tragelement 16 ein E-förmiges Profil, wobei der U-förmige Teil 7 der Energieübertragung ein elektrisch gut leitender Bereich des Tragelement 16 ist. Er besteht beispielsweise aus reinem Aluminium. Die Patch-Antenne 14 befindet sich gegenüber dem Wellenleiter 1 auf der Basis des U-förmigen Übertragerkopfes 2.

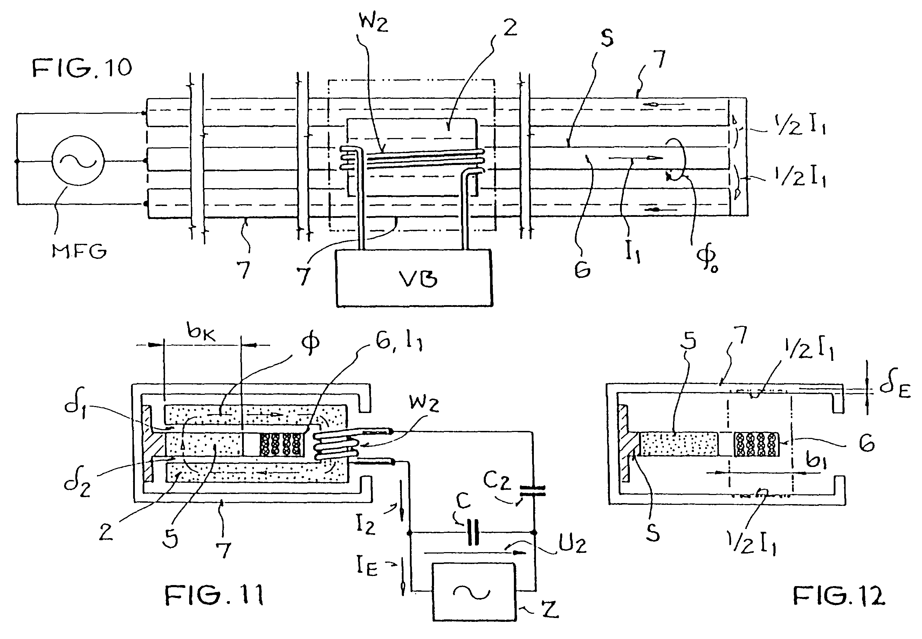

Die Fig. 10 bis 12 stellen das Prinzip der auf einer Seite offenen koaxialen Leiteranordnung des Primärkreises der Energieübertragung dar. Im Übertragerkopf 2 umfaßt ein U-förmiger Ferritkern 2 den Mittelleiter 6 und leitet den magnetischen Fluß Φ durch die Sekundärwicklung W₂ (s. Fig. 11). Der Mittelleiter 6 wird an einem Ende über einen Mittelfrequenzgenerator gespeist, so daß er den Strom I₁ führt. Er ist an dem von der Speisequelle entfernten Ende mit dem Gehäuse verbunden. Der Strom teilt sich hier wegen der Symmetrie der Anordnung in zwei gleichgroße Teilströme I_{1/2} und fließt über das Gehäuse zu dem Mittelfrequenzgenerator MFG zurück (Fig. 10).

Infolge der bei hohen Frequenzen in massiven Leitern wie dem U-förmigen Gehäuse (beispielsweise aus Aluminium) auftretende Stromverdrängung, häufig auch als Skineffekt bezeichnet, verteilt sich der Strom nicht gleichmäßig in den Gehäusewandungen, sondern dringt von innen her nur entsprechend der Eindringtiefe δ_{E} in die Gehäusewandungen ein (s. Fig. 12). Die Eindringtiefe beträgt bei 25 kHz und Aluminium etwa 0,5 mm. Der Strom verteilt sich auch nicht gleichmäßig über den inneren Umfang des U-Profils, sondern fließt vorwiegend an den Stellen der größten magnetischen Feldstärken. Auf den Streckenabschnitten, an denen sich, wie Fig. 12 zeigt, kein Übertragerkopf befindet, sind das die dem Mittelleiter 6 gegenüber und am nächsten liegenden Stromführungsbereiche der Ausdehnung b_{I}. Für die Rückleitung steht daher nur ein Querschnitt zur Verfügung, der sich aus der stromführenden Breite b_{I} und der durch die Frequenz und die Materialeigenschaften bestimmten Eindringtiefe δ_{E} des Mittelfrequenzstromes ergibt. Der Innen- oder Mittelleiter 6 wird vorteilhafterweise aus Mittelfrequenzlitze oder Hochfrequenzlitze hergestellt, um die Stromverdrängung in diesem Bereich zu eliminieren.

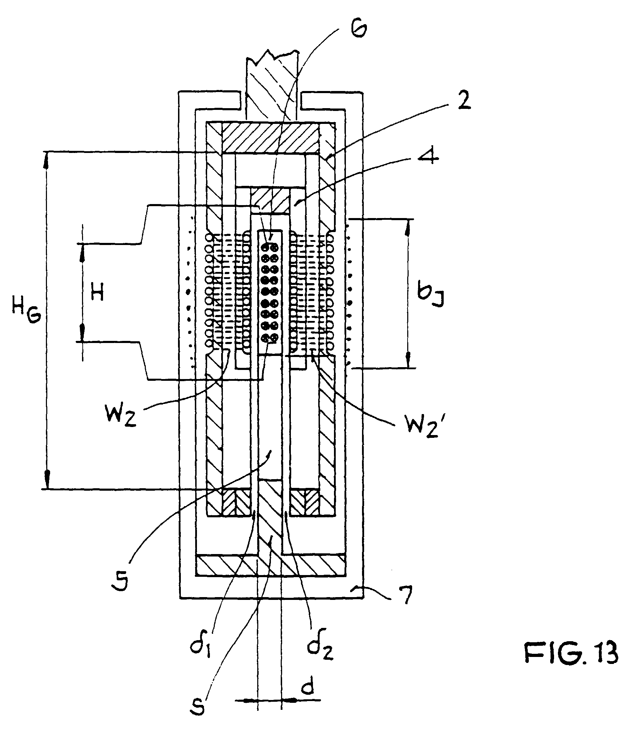

Durch die begrenzte Eindringtiefe des Stromes und die ungleichmäßige Verteilung der Stromdichte auf den Innenseiten des Abschirmgehäuses können der wirksame Widerstand und die Verluste in der Rückleitung 7 größer als in dem Innenleiter 6 aus Mittelfrequenzlitze sein. Durch die Formgebung von Innenleiter und dem Rück- oder Außenleiter, der gleichzeitig als Abschirmung und Gehäuse 7 dient, ist daher ein möglichst breiter Stromführungsbereich der Breite b_{I} am inneren Gehäuseumfang anzustreben. Dies geschieht am zweckmäßigsten in einer Form, wie Fig. 13 zeigt, bei welcher der Innenleiter 6 schmal und mit einer möglichst großen Höhe H ausgeführt wird. Die Abmessungen der gesamten Übertrageranordnung und diezum Übertragen einer bestimmten Leistung erforderliche Stromstärke I werden entscheidend durch die Größe des wirksamen Luftspalts im magnetischen Kreis bestimmt. Damit der Luftspalt des magnetischen Kreises, der den magnetischen Fluß führt, nicht größer sein muß als das mechanische Spiel δ₁ und δ₂ des Übertragerkopfes, können in die Stütze S des Mittelleiters Ferritkörper 5 eingesetzt werden. Diese Ferritteile erhöhen die Induktivität des Mittelleiters praktisch nicht, weil sich der Strom in den Seitenwänden nach physikalischen Gesetzen stets räumlich so einstellt, daß die Induktivität ein Minimum wird, d. h. der Strom vorwiegend auf den den Mittelleitern gegenüberliegenden Seitenteilen fließt.

Bei dem U-förmigen Ferritkern 2 in Fig. 13 wie in Fig. 5a besteht die Sekundärwicklung aus zwei Teilwicklungen W₂ und W₂', die auf beiden Schenkeln des Kerns direkt gegenüber dem in der Höhe H ausgedehnten Innenleiter angeordnet sind. Durch diese Wicklungsanordnung wird ein hoher magnetischer Koppelfaktor zum Primärkreis und eine optimale Ausnutzung des verfügbaren Wickelraums bei kleiner Bauform und Induktivität des Koaxialleiters erreicht.

Für viele Anwendungen der berührungslosen Energieübertragung, wie z. B. auch in der Fördertechnik, werden Übertrageranordnungen benötigt, bei denen sich mehrere Verbraucher mit beliebig veränderbarem Leistungsbedarf auf derselben Übertragungsstrecke bewegen können. Das Einsetzen mehrerer Übertragerköpfe in den offenen Koaxialleiter oder in die primäre Leiterschleife 6, führt elektrisch zu einer Reihenschaltung der bewegbaren Verbraucher.

In einer vorteilhaften Ausführungsform der Erfindung wird in den primärseitigen Koaxialleiter ein konstanter Mittelfrequenzstrom I₁ eingeprägt. Auf der Sekundärseite sind elektronische Leistungsstellglieder mit Vorteil zu verwenden, welche unterschiedliche Verbraucher mit den erforderlichen Spannungen und Strömen speisen. Bei einem weiteren Ausführungsbeispiel der Erfindung ist der Antriebsmotor ein

Linearmotor mit passivem Steter in der Strecke. Bei Verwendung eines Linearmotors ist es vorteilhaft, das Gewicht des Transportelements einschließlich der zuladbaren Güter durch ein magnetisches Levitationssystem zu kompensieren. Diese schwebende Aufhängung muß durch eine an den Seiten des Fahrzeugs angebrachten Spurführung stabilisiert werden. Dies kann ebenso wie das Schweben des Fahrzeugs durch Magnete erfolgen, welche über eine Luftspaltregelung für eine Spurführung sorgen.

## Patentansprüche

1. Spurgeführte Transporteinrichtung zum Befördern von Gütern bestehend aus einer Fahrstrecke mit Trag- und Spurführungselementen (16), einem von einer steuer- und regelbaren Antriebseinheit (17) bewegten Transportelement (10) mit Speicherungs- sowie Ein- und Ausgabeeinheiten für Güter (G) sowie einer Datenverarbeitungs- und Informationsübertragungseinheit (20), wobei für die Fortbewegung Mittel (GL) zum reibungsarmen Fahren mit Spurführungselementen (SP) vorgesehen sind und einer Einrichtung zum berührungslosen induktiven Übertragen elektrischer Energie auf das Transportelement, welche aus einer längs der Fahrstrecke verlegten, den Primärkreis der Energieübertragungseinrichtung bildenden Leiteranordnung (6, 7) und mindestens einem mit dem Transportelement verbundenen Übertragerkopf (2) besteht, wobei der Übertragerkopf einen weichmagnetischen Ferritkern und eine diesen umfassende Sekundärwicklung (W₂), die mit dem Primärkreis magnetisch gekoppelt ist, aufweist,
**dadurch gekennzeichnet**,
daß der Außenleiter (7) des Primärkreises, der aus einem elektisch leitfähigen Material besteht, U-förmig ausgebildet ist, den Innenleiter koaxial umfaßt und mit den Trag- und Spurführungselementen leitend verbunden ist, wobei die Leiteranordnung (6, 7) des Primärkreises der Energieübertragung in die Trag- und Spurführungselemente (16) integriert ist, und daß längs der Fahrstrecke zur Informationsübertragung zwischen einer Feststation (12) und dem Transportelement (10) ein Wellenleiter (1) der mit einer Antenne (14) auf dem Transportelement (10) kommuniziert in den Primärkreis (6, 7) der Energieübertragung oder in die Trag- und Spurführungselemente (16) des Transportsystems integriert ist.

2. Spurgeführte Transporteinrichtung nach Anspruch 1,
dadurch gekennzeichnet,
daß zur Informationsübertragung zwischen einer Feststation (12) und dem Transportelement (10) entlang des Fahrweges ein Leckwellenleiter (1) verlegt und an den Trag- und Spurführungselementen (16) oder an den Leitern (6,7) des Primärkreises der Energieübertragung befestigt ist und daß zur Informationsübertragung zwischen dem Transportelement (10) und dem Leckwellenleiter (1) auf dem Transportelement eine Antenne (14) angeordnet ist.

3. Spurgeführte Transporteinrichtung nach Anspruch1 oder 2,
dadurch gekennzeichnet,
daß der Leckwellenleiter (1) als Koaxialleitung ausgebildet ist, die mit quer zur Ausbreitungsrichtung der Wellen verlaufenden Schlitzen (3) als Strahlungsöffnungen versehen ist, wobei sich die Abstände der Schlitze in Gruppen periodisch wiederholen.

4. Spurgeführte Transporteinrichtung nach Anspruch 1 bis 3,
dadurch gekennzeichnet,
daß die in einem Mindestabstand zum quergeschlitzten Leckwellenleiter (1) geführte Patch-Antenne (14) neben dem Übertragerkopf (2) auf dessen Stirnseite angeordnet ist.

5. Spurgeführte Transporteinrichtung nach Anspruch 1 oder 2,
dadurch gekennzeichnet,
daß der Leckwellenleiter (1) als Koaxialleitung mit einem am Umfang in axialer Richtung durchgehenden Längsschlitz (3) ausgebildet ist, und daß die Informationsübertragung über eine in einem Maximalabstand entlang des Längsschlitzes geführte als Nahfeldsonde ausgebildete Antenne erfolgt.

6. Spurgeführte Transporteinrichtung nach einem der Ansprüche 1 bis 5,
dadurch gekennzeichnet,
daß der Leckwellenleiter (1) am oberen Ende der Leiterstütze (S) über dem Innenleiter (6) des Primärkreises der Energieübertragungseinrichtung angeordnet ist.

7. Spurgeführte Transporteinrichtung nach einem der Ansprüche 1 bis 6,
dadurch gekennzeichnet,
daß die Leiteranordnung (6, 7) der Energieübertragung und der Leckwellenleiter (1) der Informationsübertragung in Winkeln und Spalten der Trag- und Spurführungselemente (16) angeordnet sind.

8. Spurgeführte Transporteinrichtung nach einem der Ansprüche 1 bis 6,
dadurch gekennzeichnet,
daß für die Informationsübertragung über den Leckwellenleiter (1) eine Trägerfrequenz des ISM-Bandes von 2,4 GHz verwendet wird.

9. Spurgeführte Transporteinrichtung nach Anspruch 1,
dadurch gekennzeichnet,
daß die Leiteranordnung (6, 7) der Energieübertragung zugleich den Leckwellenleiter (1) der Informationsübertragung bildet.

10. Spurgeführte Transporteinrichtung nach Anspruch 1 oder 9,
dadurch gekennzeichnet,
daß an der Einspeisestelle zur Energieübertragung ein als Filter ausgebildetes Koppelelement (K) vorgesehen ist, das dem Mittelfrequenzstrom eine höhere Frequenz zur informationsübertragung von der Feststation (12) zum Transportelement (10) überlagert und in der umgekehrten Richtung die vom Fahrzeug gesendete höhere Frequenz vom Mittelfrequenzstrom trennt und daß an die Sekundärwicklungen (W2, W2') des auf dem Transportelement angeordneten Übertragerkopfes (2) ein entsprechendes Koppelelement (K') angeschlossen ist.

11. Spurgeführte Transporteinrichtung nach einem der Ansprüche 1 bis 10,
dadurch gekennzeichnet,
daß der von dem U-förmigen Außenleiter (7) der Energieübertragung koaxial umfaßte Innenleiter (6) auf einer isolierenden Leiterstütze (S) angeordnet ist, wobei der Innenleiter an dem von der Einspeisestelle entfernten Ende der Leiteranordnung an das Gehäuse angeschlossen ist und daß der Innenleiter von einem U-förmigen Übertragerkopf (2) mit einem U-förmigen Ferritkern umgeben ist, der auf seinen Schenkeln die Sekundärwicklung (W₂) für den Energieabgriff trägt.

12. Spurgeführte Transporteinrichtung nach einem der Ansprüche 1 bis 11,
dadurch gekennzeichnet,
daß an die Sekundärwicklung (W₂) parallel zum Lastwiderstand (Z) ein Kondensator (C) geschaltet ist, der den Magnetisierungsstrom zum Erzeugen der magnetischen Flußdichte (B) im Luftspalt des Ferritkerns liefert.

13. Spurgeführte Transporteinrichtung nach einem der Ansprüche 1 bis 12,
dadurch gekennzeichnet,
daß die Sekundärwicklung mit einem Kondensator (C2) in Reihe geschaltet ist, der den induktiven Spannungsabfall an der Streuinduktivität des Übertragerkopfes kompensiert.

14. Spurgeführte Transporteinrichtung nach einem der Ansprüche 11 bis 13,
dadurch gekennzeichnet,
daß die Leiterstütze (S) zum Reduzieren der magnetischen Spaltweite auf die unbedingt erforderlichen mechanischen Luftspalte (δ₁, δ₂) einen ferritischen Bereich (5) aufweist.

15. Spurgeführte Transporteinrichtung nach einem der Ansprüche 1 bis 14,
dadurch gekennzeichnet,
daß die Spaltebene zwischen der Primärleiteranordnung (6, 7) und dem Übertragerkopf (2) zur Gewährleistung des für Kurvenfahrten der Fahrzeuge erforderlichen Spiels parallel zur Bewegungsebene der Transportelemente (10) liegt.

16. Spurgeführte Transporteinrichtung nach einem der Ansprüche 1 bis 15,
dadurch gekennzeichnet,
daß die auf das Transportelement (10) einschließlich der zuladbaren Güter wirkende Schwerkraft durch eine auf den Tragelementen (16) laufenden Rolle (18) kompensiert ist.

17. Spurgeführte Transporteinrichtung nach einem der Ansprüche 1 bis 15,
dadurch gekennzeichnet,
daß die auf das Transportelement (10) einschließlich der zuladbaren Güter wirkende Schwerkraft durch ein magnetisches Levitationssystem kompensiert ist und daß der Antrieb über einen Linearmotor erfolgt.

18. Spurgeführte Transporteinrichtung nach einem der Ansprüche 1 bis 17,
dadurch gekennzeichnet,
daß Fördern, Lagern, Sortieren, Verteilen und Kommissionieren von Gütern und/oder von den die Güter transportierenden Transportelementen (10) durch die von einer zentralen Feststation (12) auf die Transportelemente übertragenen und dort gespeicherten Informationen gesteuert ist.

19. Spurgeführte Transporteinrichtung nach einem der Ansprüche 1 bis 18,
dadurch gekennzeichnet,
daß zur Be- und Entladung von Gütern (G) auf dem Transportelement (10) ein angetriebener Quergurtförderer vorgesehen ist.

20. Spurgeführte Transporteinrichtung nach einem der Ansprüche 1 bis 19,
dadurch gekennzeichnet,
daß mittels aktiver Spurführungselemente das Befahren passiver Weichen vorgesehen ist.

## Claims

1. A track-guided transport apparatus for conveying goods comprising a route section with carrier and track-guide elements (16), a transport element (10) moved by a controllable and regulatable drive unit (17) and having storage and input and output units for goods (G), and a data processing and information transmission unit (20), wherein there are provided means (GL) for low-friction travel with track-guide elements (SP) for locomotion, and a device for contact-less inductive transmission of electrical power to the transport element, comprising a conductor arrangement (6, 7) laid along the route section and forming the primary circuit of the power transmission device, and at least one transmission head (2) connected to the transport element, wherein the transmission head has a soft-magnetic ferrite core and a secondary winding (W₂) which surrounds the ferrite core and which is magnetically coupled to the primary circuit, characterised in that the outer conductor (7) of the primary circuit which comprises an electrically conductive material is of a U-shaped configuration and coaxially embraces the inner conductor and is conductively connected to the carrier and track-guide elements, wherein the conductor arrangement (6, 7) of the primary circuit of the power transmission means is integrated into the carrier and track-guide elements (16), and that along the route section for information transmission between a fixed station (12) and the transport element (10) a waveguide (1) which communicates with an antenna (14) on the transport element (10) is integrated into the primary circuit (6, 7) of the power transmission means or into the carrier and track-guide elements (16) of the transport system.

2. A track-guided transport apparatus according to claim 1 characterised in that for information transmission between a fixed station (12) and the transport element (10) a leakage waveguide (1) is laid along the route path and fixed to the carrier and track-guide elements (16) or to the conductors (6, 7) of the primary circuit of the power transmission means and that an antenna (14) is arranged on the transport element (10) for information transmission between the transport element (10) and the leakage waveguide (1).

3. A track-guided transport apparatus according to claim 1 or claim 2 characterised in that the leakage waveguide (1) is in the form of a coaxial line provided as radiation openings with slots (3) extending transversely with respect to the direction of propagation of the waves, wherein the spacings of the slots are periodically repeated in groups.

4. A track-guided transport apparatus according to claims 1 to 3 characterised in that the patch antenna (14) guided at a minimum spacing relative to the transversely slotted leakage waveguide (1) is arranged beside the transmission head (2) on the face thereof.

5. A track-guided transport apparatus according to claim 1 or claim 2 characterised in that the leakage waveguide (1) is in the form of a coaxial line with a longitudinal slot (3) extending continuously in the axial direction at the periphery thereof, and that information transmission is effected by way of an antenna which is in the form of a close-range probe and which is guided at a maximum spacing along the longitudinal slot.

6. A track-guided transport apparatus according to one of claims 1 to 5 characterised in that the leakage waveguide (1) is arranged at the upper end of the conductor support (S) over the inner conductor (6) of the primary circuit of the power transmission means.

7. A track-guided transport apparatus according to one of claims 1 to 6 characterised in that the conductor arrangement (6, 7) of the power transmission means and the leakage waveguide (1) of the information transmission means are arranged in angles and gaps of the carrier and track-guide elements (16).

8. A track-guided transport apparatus according to one of claims 1 to 6 characterised in that a carrier frequency of the ISM-band of 2.4 GHz is used for energy transmission by way of the leakage waveguide (1).

9. A track-guided transport apparatus according to claim 1 characterised in that the conductor arrangement (6, 7) of the power transmission means at the same time forms the leakage waveguide (1) of the information transmission means.

10. A track-guided transport apparatus according to claim 1 or claim 9 characterised in that provided at the feed-in location to the power transmission means is a coupling element (K) which is in the form of a filter and which superimposes a higher frequency on the medium-frequency current for information transmission from the fixed station (12) to the transport element (10) and in the reverse direction separates from the medium-frequency current the higher frequency sent from the vehicle and that connected to the secondary windings (W2, W2') of the transmission head (2) arranged on the transport element is a corresponding coupling element (K).

11. A track-guided transport apparatus according to one of claims 1 to 10 characterised in that the inner conductor (6) which is coaxially embraced by the U-shaped outer conductor (7) of the power transmission means is arranged on an insulating conductor support (S), wherein at the end of the conductor arrangement remote from the feed-in location the inner conductor is connected to the housing and that the inner conductor is surrounded by a U-shaped transmission head (2) with a U-shaped ferrite core which on its limbs carries the secondary winding (W₂) for taking off power.

12. A track-guided transport apparatus according to one of claims 1 to 11 characterised in that a capacitor (C) is connected to the secondary winding (W₂) parallel to the load resistance (Z) and supplies the magnetisation current for producing the magnetic flux density (B) in the air gap of the ferrite core.

13. A track-guided transport apparatus according to one of claims 1 to 12 characterised in that the secondary winding is connected in series with a capacitor (C2) which compensates the inductive voltage drop at the leakage inductance of the transmission head.

14. A track-guided transport apparatus according to one of claims 11 to 13 characterised in that the conductor support (S) has a ferritic region (5) for reducing the magnetic gap width to the absolutely necessary mechanical air gaps (δ₁, δ₂).

15. A track-guided transport apparatus according to one of claims 1 to 14 characterised in that the gap plane between the primary conductor arrangement (6, 7) and the transmission head (2) is parallel to the plane of movement of the transport elements (10) to guarantee the clearance required for the vehicles to negotiate bends.

16. A track-guided transport apparatus according to one of claims 1 to 15 characterised in that the force of gravity acting on the transport element (10) including the goods which can be loaded on is compensated by a roller (18) which runs on the carrier elements (16).

17. A track-guided transport apparatus according to one of claims 1 to 15 characterised in that the force of gravity acting on the transport element (10) including the goods which can be loaded on is compensated by a magnetic levitation system and that the drive is provided by way of a linear motor.

18. A track-guided transport apparatus according to one of claims 1 to 17 characterised in that conveyance, storage, sorting, distribution and destinational allocation of goods and/or transport elements (10) transporting the goods is controlled by the items of information which are transmitted from a central fixed station (12) to the transport elements and stored there.

19. A track-guided transport apparatus according to one of claims 1 to 18 characterised in that there is provided a driven transverse belt conveyor for loading and unloading goods (G) on the transport element (10).

20. A track-guided transport apparatus according to one of claims 1 to 19 characterised in that negotiation of passive switching points is provided by means of active track-guide elements.

## Revendications

1. Dispositif de transport guidé par pistes pour l'acheminement de produits, constitué d'un trajet comportant des éléments de support et de guidage par pistes (16), d'un élément de transport (10) déplacé par une unité d'entraînement (17) pouvant être commandée et réglée et comportant des unités de mémoire ainsi que des unités d'entrée et de sortie pour des produits (G), ainsi qu'une unité de traitement de données et de transmission d'informations (20), des moyens (GL) pour la circulation à faible frottement comportent des éléments de guidage par pistes (SP) étant prévus pour le déplacement, et d'un dispositif destiné à la transmission, sans contact par induction, d'énergie électrique sur l'élément de transport et constitué d'un dispositif de conducteurs (6, 7) installé le long du trajet et formant le circuit primaire du dispositif de transmission d'énergie électrique et d'au moins une tête de transmission (2) reliée à l'élément de transport comportant un noyau de ferrite á faible coercivité et un enroulement secondaire (W₂) entourant ce dernier et couplé magnétiquement avec le circuit primaire,
**caractérisé**
en ce que le conducteur extérieur (7) du circuit primaire, qui est constitué d'un matériau électriquement conducteur, est conformé on forme de U, entoure le conducteur intérieur de manière coaxiale et est relié de manière conductrice avec les éléments de support et de guidage par pistes, le dispositif de conducteurs (6, 7) du circuit primaire du dispositif de transmission d'énergie étant Intégré dans les éléments de support et de guidage par pistes (16) et
on ce que, le long du trajet, pour la transmission d'informations entre une station fixe (12) et l'élément de transport (10), un guide d'ondes (1), qui communique avec l'élément de transport (10) au moyen dune antenne (14), est Intégré dans le circuit primaire (6, 7) du dispositif de transmission d'énergie ou dans les éléments de support et de guidage par pistes (16) du système de transport.

2. Dispositif de transport guidé par pistes selon la revendication 1,
caractérisé
en ce que, pour la transmission d'informations entre une station fixe (12) et l'élément de transport (10), le long du trajet, un guide d'ondes à fuites (1) est Installé et est fixé sur les éléments de support et de guidage par pistes (16) ou sur les conducteurs (6, 7) du circuit primaire du dispositif de transmission d'informations et on ce que, pour la transmission d'informations entre l'élément de transport (10) et le guide d'ondes à fuites (1), une antenne (14) est disposée sur l'élément de transport.

3. Dispositif de transport guIdé par pistes selon la revendication 1 ou 2,
caractérisé
en ce que le guide d'ondes à fuites (1) est réalisé sous la forme d'une conduite coaxiale pourvue de fentes (3) s'étendant transversalement par rapport à la direction de rayonnement des ondes et qui forment des ouvertures d'émission, les distances entre les fentes se répétant par groupes de manière périodique.

4. Dispositif do transport guidé par pistes selon l'une quelconque des revendications 1 à 3,
caractérisé
en ce que l'antenne de raccordement (14) Introduite à une faible distance du guide d'ondes (1) à fuites et à fentes transversales, est disposée à côté de la tête de transmission (2) sur la face frontale de cette dernière.

5. Dispositif do transport guidé par pistes selon la revendication 1 ou 2,
caractérisé
en ce que le guide d'ondes (1) à fuites est réalisé sous la forme d'une conduite coaxiale comportant une fente longitudinale (3) traversant sur la périphérie selon une direction axiale et on ce que la transmission d'informations est réalisée par l'intermédiaire d'une antenne Introduite à une distance maximale le long de la fente longitudinale et réalisée sous la forme d'une sonde de champ proche.

6. Dispositif de transport guidé par pistes selon l'une quelconque des revendications 1 à 5,
caractérisé
on ce que le guide d'ondes (1) à fuites est disposé à l'extrémité supérieure du support de conducteurs (S) au-dessus du conducteur intérieur (6) du circuit primaire du dispositif de transmission d'énergie.

7. Dispositif de transport guidé par pistes selon l'une quelconque des revendications 1 à 6,
caractérisé
on ce que le dispositif de conducteurs (6, 7) du dispositif de transmission d'énergie et le guide d'ondes (1) à fuites du dispositif de transmission d'informations sont disposés dans des angles et des fentes des éléments de support et de guidage par pistes (16).

8. Dispositif de transport guidé par pistes selon l'une quelconque des revendications 1 à 6,
caractérisé
on ce que, pour la transmission d'informations au moyen du guide d'ondes (1) à fuites, on utilise une fréquence porteuse de la bande I. S. M. de 2,4 GHz-.

9. Dispositif de transport guidé par pistes selon la revendication 1,
caractérisé
on ce que le dispositif de conducteurs (6, 7) du dispositif de transmission d'énergie constitue on même temps le guide d'ondes (1) à fuites du dispositif de transmission d'informations.

10. Dispositif de transport guidé par pistes selon la revendication 1 ou 9,
caractérisé
en ce que, à l'emplacement d'alimentation pour la transmission d'énergie, on prévoit un élément de couplage (K) réalisé sous la forme d'un filtre qui superpose une fréquence plus élevée au courent à moyenne fréquence pour la transmission d'informations de la station fixe (12) à l'élément de transport (10) et qui, en sens inverse, sépare la fréquence plus élevée émise par le chariot du courant à moyenne fréquence, et en ce qu'un élément de couplage (K') correspondant est relié aux enroulements secondaires (W₂, W₂') de la tête de transmission (2) disposée sur l'élément de transport

11. Dispositif de transport guidé par pistes selon l'une quelconque des revendications 1 à 10,
caractérisé
en ce que te conducteur intérieur (6) entouré coaxialement par le conducteur extérieur (7) en forme de U du dispositif de transmission d'énergie est disposé sur un support isolant de conducteurs (S), le conducteur intérieur étant relié au châssis à l'extrémité du dispositif de conducteurs qui est éloignée de l'emplacement d'alimentation, et en ce que le conducteur intérieur est entouré par une tête de transmission (2) en forme de U comportant un noyau de ferrite en forme de U qui porte sur ses branches l'enroulement secondaire (W₂) pour te prélèvement d'énergie.

12. Dispositif de transport guidé par pistes selon l'une quelconque des revendications 1 à 11,
caractérisé
en ce que sur l'enroulement secondaire (W₂), en parallèle sur la résistance de charge (Z), on branche un condensateur(C) qui fournit le courant de magnétisation pour la production de la densité de flux magnétique (B) dans l'entrefer du noyau de ferrite.

13. Dispositif de transport guidé par pistes selon l'une quelconque des revendications 1 à 12,
caractérisé en ce que l'enroulement secondaire est branché an série avec un condensateur (C2) qui compense la chute de tension Inductive aux bornes de l'inductance de fuite de la tête de transmission.

14. Dispositif de transport guidé par pistes selon l'une quelconque des revendications 11 à 13,
caractérisé
en ce que le support de conducteurs (S) comporte, pour la réduction de l'interstice magnétique à la valeur de l'entrefer mécanique absolument nécessaire (δ₁, δ₂), une zone ferritique (5).

15. Dispositif de transport guidé par pistes selon l'une quelconque des revendications 1 à 14,
caractérisé
on ce que le plan de fente entre l'enroulement primaire (6, 7) et la tête de transmission (2) est disposé, pour assurer le jeu nécessaire pour la circulation an courbe des chariots, parallèlement au plan de déplacement des éléments de transport (10).

16. Dispositif de transport guidé par pistes selon l'une quelconque des revendications 1 à 15,
caractérisé
en ce que la force de pesanteur agissant sur l'élément de transport (10), en incluent les produits pouvant être chargés, est compensée par un rouleau (18) circulant sur les éléments de support (16).

17. Dispositif de transport guidé par pistes selon l'une quelconque des revendications 1 à 15,
caractérisé
en ce que la force de pesanteur agissant sur l'élément de transport (10), on incluant les produits pouvant être chargés, est compensée par un système de lévitation magnétique, et on ce que l'entraînement est réalisé au moyen d'un moteur linéaire.

18. Dispositif de transport guidé par pistes selon l'une quelconque des revendications 1 à 17,
caractérisé
en ce que la fourniture, le stockage, le tri, la répartition et la préparation des commandes de produits et/ou des éléments de transport (10) transportant les produits sont commandés par les informations transmises d'une station fixe (12) aux éléments de transport et y sont mémorisées.

19. Dispositif de transport guidé par pistes selon l'une quelconque des revendications 1 à 18,
caractérisé
en ce que, pour le chargement et le déchargement de produits (G) sur l'élément de transport (10), on prévoit un transbordeur de produits transversal.

20. Dispositif de transport guidé par pistes selon l'une quelconque des revendications 1 à 19,
caractérisé
en ce que, au moyen d'éléments de guidage actifs, on prévoit la circulation sur des aiguillages passifs.
